# NEW EUROPEAN PATENT SPECIFICATION

(11) **EP 2 996 485 B2**
(45) Date of publication and mention of the opposition decision: **05.03.2025**
(45) Mention of the grant of the patent: 02.10.2019
(21) Application number: 14789352.3
(22) Date of filing: 08.05.2014
(51) Int. Cl.: A23F 5/40, A23F 5/24, A23F 5/34, B65D 85/804, A47J 31/40

(54) **COFFEE PRODUCT**
KAFFEEPRODUKT
PRODUIT À BASE DE CAFÉ

(30) Priority: 14.05.2013 GB 201308661
(43) Date of publication of application: 23.03.2016
(73) Proprietor: Koninklijke Douwe Egberts B.V., 3532 AD Utrecht (NL)
(72) Inventor: DIXEY, Justin, Banbury Oxfordshire OX16 0SX (GB); O'BRIEN, Stephen, William, Greystones Co. Wicklow (IE); BENJAMIN, Jack, Woodford Green Essex IG8 0LQ (GB); SIDAPRA, Kalpita, Dilipkumar, Milton Keynes Buckinghamshire MK14 5PH (GB)
(74) Representative: Boult Wade Tennant LLP
(86) International application number: PCT/IB2014/000959
(87) International publication number: WO 2014/184654

(56) References cited:
- EP-A1- 2 491 797
- EP-A2- 0 220 889
- WO-A1-2009/059938
- NL-C- 3 472
- US-A- 3 261 689
- US-A1- 2011 183 048

## Description

This disclosure relates to a method of producing an instant coffee. In particular, the disclosure relates to a method for producing an instant coffee which provides a full flavoured beverage with a light coloured crema.

Instant coffee beverage ingredients are popular with consumers because they allow for the ready reconstitution of a coffee beverage at the consumer's convenience. There are a number of recent instant coffee products, both spray dried and freeze-dried, that are formed from a liquid coffee extract containing a small amount of roast and ground coffee. It has been found that the inclusion of this roast and ground coffee provides a further depth of flavour and more closely simulates a beverage freshly prepared from coffee beans. Indeed, soluble coffee beverages containing microground whole beans offer improved organoleptic properties for consumers, such as improved mouthfeel, and are positively perceived in the marketplace as being more related to 'proper coffee', i.e. freshly brewed roast and ground.

The inclusion of the roast and ground coffee material has been found to have some less desirable consequences, however. For example, the appearance of the final beverage can be overly dark, giving the appearance superficially of an overly strong beverage. Alternatively, the foam which forms upon reconstitution with hot water is very dark and 'dirty', i.e. speckled, in appearance. This is a problem in that the foam is no longer reminiscent of espresso crema and is generally considered unsightly and unusual for coffee.

EP2491797 discloses an instant Turkish coffee made by steam-treating roast and ground coffee.

Accordingly, it is desirable to provide an improved instant coffee for forming a coffee beverage and/or tackle at least some of the problems associated with the prior art or, at least, to provide a commercially useful alternative thereto.

Accordingly, in a first aspect the present disclosure provides a method for producing an instant coffee, the method comprising:
providing a finely ground roasted coffee material;
providing an aqueous coffee extract;
mixing the finely ground roasted coffee material with the aqueous coffee extract to form a first mixture; and
drying the first mixture,
wherein, before drying, the finely ground roasted coffee material is heated to a temperature of from 70 to 100°C in an aqueous environment for a duration of from 1 minute to 3 hours,
wherein the step of drying the first mixture is a step of spray-drying the first mixture.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The present inventors have found that conventional spray-dried instant coffees comprising finely ground roasted coffee generally provide a final beverage having an overly dark appearance. This is speculated to be caused by two factors. Firstly, on dissolution of the spray-dried coffee, a portion of the finely ground material is carried to the surface of the beverage and forms part of the crema. Thus, the crema comprises more of the roast and ground material than might be otherwise expected. Secondly, the roast and ground material is then at least partially extracted by the moisture present in the crema and causes staining of the crema to an undesirably dark colour.

Without wishing to be bound by theory it is believed that the darkening of the foam in these cases occurs as the solid microground coffee particles in the cup, which have not been extracted of their soluble solids in earlier processing, are leached/extracted by hot water in the cup. This is supported by the discovery that for water of temperature less than 70°C, no noticeable dark colour problem exists. For temperatures above this point however, increasingly dark foam colours result.

The inventors have found that the new method provides an instant coffee composition with all of the flavour components of a conventional coffee powder containing roast and ground material, while avoiding the problem of staining the crema. Accordingly, a desirable lighter coloured beverage can be produced.

The instant coffee is a spray-dried coffee.

Preferably the instant coffee is a foaming instant coffee. That is, preferably the instant coffee comprises trapped gas. The gas is trapped in pores within the instant coffee. A number of different techniques are available to arrive at a foaming instant coffee. Foaming coffees (for example spray dried crema brands such as Jacobs Velvet^{tm}) offer increased organoleptic attributes to the consumer due to the presence of a foam layer which forms upon reconstitution with hot water and which resembles the crema of espresso coffee.

Preferably the instant coffee comprises a foam-booster or foaming agent to increase the crema that is formed. A foam booster is one which, upon addition of a liquid, induces the formation of or forms a foam. It is preferred that the foam booster ingredient comprises a matrix comprising carbohydrate and/or protein, preferably milk protein, and entrapped gas. The gas is preferably present in an amount to release upon addition of liquid at least about 1 ml of gas at ambient conditions per gram of booster. Such ingredients are disclosed in WO01/08504 which is incorporated herein by reference.

Indeed, the present inventors have found that foaming coffees are particularly susceptible to the stained crema. Without wishing to be bound by theory, it is speculated that the increased bubbles serve to entrain a greater proportion of the roast and ground coffee in the crema. The method disclosed herein serves to mitigate this problem.

The term "crema" is used herein to refer to the persistent bubbles or foam that is formed on the coffee beverage. It should be appreciated that when preparing a beverage with a foaming coffee, the foam on the coffee beverage may be more substantial than a traditional crema, but has been referred to as a crema herein for consistency.

The method disclosed herein is for producing an instant coffee. Instant coffees are well known in the art and the term is synonymous with soluble coffee. Such coffees, in the form of granules, can be reconstituted with an aqueous medium to provide a beverage. Generally, the aqueous medium for reconstituting a soluble coffee to provide a mug of coffee is hot and this provides a comforting final beverage.

The method comprises a step of providing a finely ground roasted coffee material. The material is derived from coffee beans that have been roasted and then ground. Techniques for roasting and grinding coffees are well known in the art. The roasted and ground coffee material is often referred to herein as microground coffee herein.

Preferably the microground coffee has a particle size (D50) of from 1 to 40 microns, more preferably 5 to 15 microns. The D50 is a conventional method used to characterise particle size distributions by volume. In particular, the D50 is the value for the mean longest particle diameter, such that half of the particles by volume have a size greater and half have a size smaller than the value.

Preferably the microground coffee has a particle size (D90) of from 30 to 100 microns, more preferably 40 to 60 microns. The D90 measurement is that 90% of the particles by volume have a particle size less than the value and 10% have a value greater. Thus, when the D90 and D50 measurements are close, the particle size distribution is a narrow peak.

The values of D10 and D90 can be measured by laser diffraction. The measurement is made with a wet Malvern diffractometer (in butanol).

The inventors have also found that by using microgrind coffee of a larger grind size (e.g. a D50 of 100 microns) the problem can be mitigated. However, such larger microground coffee particles generally settle in the cup and have a reduced specific surface area for leaching/extraction. This diminishes the organoleptic properties of microgrind inclusion and leads to high levels of in-cup sediment and reduced mouthfeel.

The method comprises a step of providing an aqueous coffee extract. An aqueous coffee extract comprises soluble coffee solids. An example of such an extract is produced by contacting roasted and ground coffee with hot water to dissolve the soluble solids from the coffee. Aqueous coffee extracts are well known in the art and are used to provide both freeze-dried and spray-dried coffee granules.

The method comprises a step of mixing the finely ground roasted coffee material with the aqueous coffee extract to form a first mixture. This step may simply involve the combination or the components, preferably with stirring. The mixing step may preferably be carried out with a high shear mixer to ensure thorough mixing is obtained and the finely ground roasted coffee is evenly distributed.

Preferably the total coffee solids in the first mixture is from 25 to 75wt%, more preferably from 40 to 60wt% and most preferably about 50wt%. The coffee solids includes soluble coffee solids in the coffee extract and the finely ground roasted coffee material. When the solids are too low, the spray-drying process is inefficient due to the amount of water that needs to be removed. When the solids are too great, the mixture is thick and the spray-drying processing apparatus is hindered.

Preferably first mixture comprises from 5 to 25wt% of finely ground roasted coffee material, more preferably from 10 to 20wt% and most preferably about 15wt%. This amount of material provides the optimum organoleptic benefit to the final beverage. Preferably the instant coffee comprises about 15wt% microground coffee. The inventors have found that it is possible to reduce the darkening problem by adding only a small percentage of microground coffee to coffee extract (e.g. less than 5wt%). However, this prevents the expected benefits of adding roast and ground material from being realised. Above 25wt%, the microground coffee results in an overly bitter beverage.

The method comprises a step of spray-drying the first mixture. Spray-drying techniques are well known in the art. Preferably the spray-drying is carried out at a pressure of from 30 to 150 Bar. By way of example, it is preferred that the spray-dried particles have a D50 of less than 500µm, a density in the range of 15-50g/100ml and a moisture content of less than 5%. It would be straight-forward for one skilled in the art to adjust the temperatures and gas injection rates to achieve these values.

The method involves heating the finely ground roasted coffee material to a temperature of from 70 to 100°C in an aqueous environment before spray-drying. This can be achieved in one of two ways:
Preferably the step of heating the finely ground roasted coffee material in an aqueous environment is performed by heating the first mixture. That is, the method comprises:
providing a finely ground roasted coffee material; providing an aqueous coffee extract;
mixing the finely ground roasted coffee material with the aqueous coffee extract to form a first mixture; heating the first mixture to a temperature of from 70 to 100°C; and spray-drying.

In an alternative embodiment, the step of heating the finely ground roasted coffee material in an aqueous environment comprises the steps of: mixing the finely ground roasted coffee material with an amount of water to provide a precursor mixture; heating the precursor mixture at a temperature of from 70 to 100°C; and wherein the first mixture is formed by mixing the precursor mixture with the aqueous coffee extract. That is, the finely ground coffee material is heat treated in an amount of water and then the water and the extract are added to a further coffee extract before drying. Advantageously, this approach avoids any thermal degradation of the liquid coffee extract before drying due to the heat-treatment step. In this alternative, the liquid coffee extract must have higher solids to allow the final solids of the first mixture to be at an appropriate level.

An alternative method, which is not presently claimed, involves maintaining the finely ground roasted coffee material in an aqueous environment at a temperature of from 5 to 70° for a duration of at least an hour before spray-drying. This can be achieved in one of two ways:
Preferably the step of maintaining the finely ground roasted coffee material in an aqueous environment is performed by providing a finely ground roasted coffee material;
providing an aqueous coffee extract; mixing the finely ground roasted coffee material with the aqueous coffee extract to form a first mixture; maintaining the first mixture at a temperature of from 5 to 70°C for a duration of at least an hour; and drying the first mixture (preferably spray-drying).

In an alternative embodiment, the step of maintaining the finely ground roasted coffee material in an aqueous environment comprises the steps of: mixing the finely ground roasted coffee material with an amount of water to provide a precursor mixture; maintaining the precursor mixture at a temperature of from 5 to 70°C for a duration of at least an hour; and wherein the first mixture is formed by mixing the precursor mixture with the aqueous coffee extract. That is, the finely ground coffee material is treated in an amount of water and then the water and the extract are added to a further coffee extract before drying. Advantageously, this approach avoids any delays in the bulk production of the coffee since the long dwelling times do not affect the bulk production.

It should be appreciated that the requirement to maintain the finely ground roasted coffee material at a temperature of from 5 to 70°C may require heating and/or cooling of the mixtures, depending on the temperatures of the starting materials and/or the ambient environment.

The present inventors have found, in multiple pilot plant spray drying trials, that exposing the microground coffee component to high temperatures, preferably exceeding 85 degrees Celsius, before the drying process, this mitigates the dark colour problem when the final product is made up with hot water in-cup. Without wishing to be bound by theory, it is speculated that this is because the heat treatment is at approximately the temperature which will typically be encountered in cup. Since this treatment immediately precedes the drying, no flavour components are lost. Alternatively, the longer dwelling time at lower temperatures have been found to achieve the same technical advantages, without adversely affecting the flavour of the coffee product.

Moreover, in each case, while the problems of crema staining could be avoided by using a pre-extracted roast and ground coffee material, this would not lead to the beneficial organo-leptic properties that result from using the initially unextracted material. It is considered that because the treatment occurs in a concentrated coffee extract, only the most readily extractable components in the roast and ground coffee material are extracted. That is, the roast and ground material is only lightly extracted by the treatment and still contains a rich source of coffee aroma and taste compounds. Indeed, it is speculated that the presence of these compounds is at a level balanced by the strength of the coffee extract used to form the final coffee beverage. Preferably the finely ground roasted coffee material does not comprise any spent coffee grounds.

Preferably the finely ground roasted coffee material is heated to a temperature of from 80 to 95°C, more preferably from 85 to 90°C. This range of temperatures corresponds to the temperatures normally experienced in a beverage preparation machine or when using water from a kettle. Accordingly, the use of an equivalent heat treatment means that only those compounds that would otherwise be extracted into the crema are extracted.

The finely ground roasted coffee material is heated in an aqueous environment to a temperature of from 70 to 100°C, or the above disclosed temperatures, for a duration of from 1 minute to 3 hours, more preferably from 15 minutes to 1 hour and most preferably for about 45 minutes. This has been found to have the greatest benefits in avoiding discoloration of the crema. If water of any temperature from cold water (around 5-10°C) to 70°C is used to perform the extraction, the processing times required are unduly long for the required processing rates.

Alternatively, in a method which is not presently claimed, the finely ground roasted coffee material is preferably maintained in an aqueous environment at a temperature of from 5 to 70°C, preferably from 10 to 60°C, more preferably 20 to 50°C for a duration of from 1 to 3 hours, more preferably from 1 hour to 2 hours.

Preferably the method further comprising a step of introducing gas into the first mixture before drying. This can be done using a dosing valve and such methods are well known in the art. Preferably the gas is nitrogen and/or carbon dioxide. Carbon dioxide results in a darker instant coffee. Preferably the gas is introduced at a pressure of 50 to 150 Bar, more preferably about 90 Bar.

Preferably the method further comprising packaging the instant coffee material. The packaging may be conventional bulk instant coffee packaging such as a jar or pot or a refill bag. Alternatively, the packaging may be a beverage preparation capsule suitable for use in a beverage preparation machine. Such machines are well known and include, for example, the Tassimo^{tm} machine.

As will be appreciated, the instant coffee obtainable according to the method disclosed herein is discernibly different from coffee compositions prepared by alternative methods. This is because the roast and ground coffee material is neither unextracted nor fully extracted. Rather, it is extracted to an extent consistent with the level of coffee compounds present in the coffee extract which forms the body of the instant coffee.

There is described herein an instant coffee comprising partially pre-extracted finely ground roasted coffee material, wherein the instant coffee is preferably a foaming instant coffee and/or a spray-dried instant coffee.

There is described herein a not-presently-claimed method of preparing a coffee beverage, the method comprising contacting the instant coffee described herein, with an aqueous medium. Preferably the aqueous medium is hot, that is, at a temperature of from 70 to 100°C, more preferably from 80 to 95°C.

There is described herein a not-presently-claimed capsule for preparing a coffee beverage, the capsule comprising an inlet for an aqueous beverage medium, an outlet for a beverage and a flowpath therebetween, said capsule further containing in the flowpath the instant coffee described herein.

There is described herein a beverage preparation system for preparing a coffee beverage as described herein, the system comprising means for providing an aqueous beverage medium to the capsule described herein. Preferably the aqueous medium is hot, that is, at a temperature of from 70 to 100°C, more preferably from 80 to 95°C.

The invention will now be described in relation to the following non-limiting figures, in which:

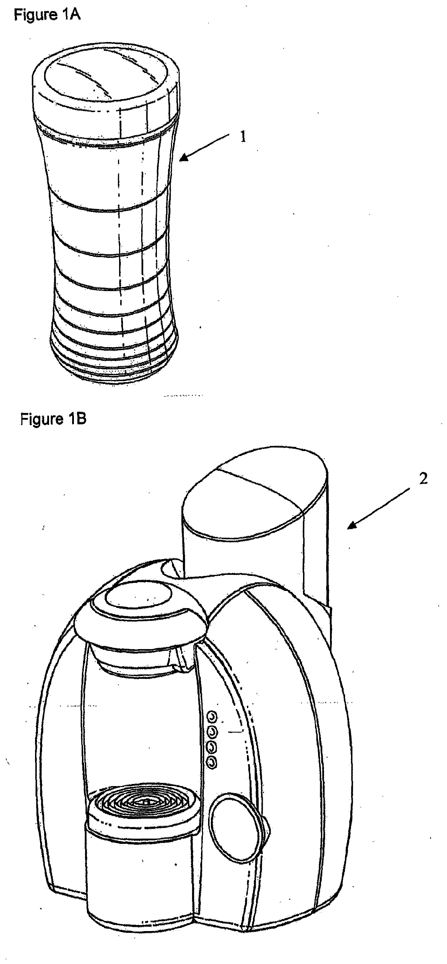

Figure 1A shows a container 1, suitable for holding an instant coffee composition as disclosed herein.
Figure 1B shows a coffee beverage preparation system.
Figure 2A shows a plot of UV absorbance at 625 micrometers over extraction time for samples of coffee.
Figure 2B shows a plot of UV absorbance at 525 micrometers over extraction time for samples of coffee.

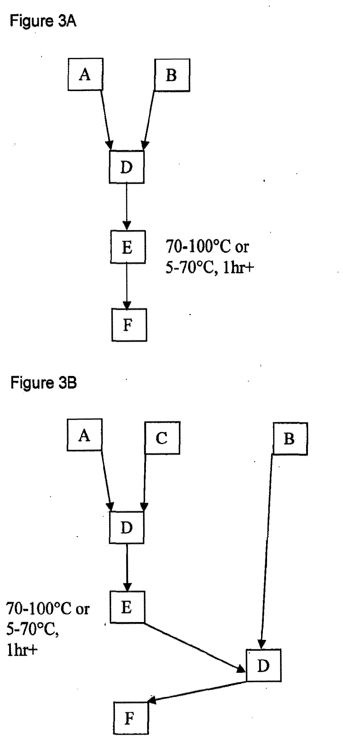

Figure 3A-C show flow-charts of the method steps disclosed herein. In particular, Figure 3A shows a hot pre-extraction in coffee extract. Figure 3B shows a hot pre-extraction in a separate water tank. Figure 3C shows a cooler pre-extraction in coffee extract.

In these figures the same reference numerals disclose the following features:
A - a finely ground roasted coffee material
B - an aqueous coffee extract
C - an amount of water
D - a mixing step
E - a dwelling step
F - a drying step

The process temperature are shown on the figures.

The invention will now be described in relation to the following non-limiting examples.

### Examples

### Example 1

In an unsuccessful trial not in accordance with the invention (Trial 1), a liquid coffee extract and 15% microground coffee solids content were mixed together before spray drying. The mixture before spray drying comprised 15% roast and ground coffee solids concentration and 50% total solids concentration. The resulting foam colour, in each case, was very dark and speckled in appearance.

In a further trial (Trial 2), a liquid coffee extract and microgrind mix corresponding to 15% microground coffee solids content was pre-heated to approximately 95 degrees Celsius and maintained at this temperature for two hours before spray drying. The mixture before spray drying comprised 15% roast and ground coffee solids concentration and 50% total solids concentration. The resulting foam colour was much lighter than the control sample (Trial 1).

In a further trial (Trial 3), 15% microgrind was high shear mixed with an equal volume of boiling water (approximately 95 Celsius) and cooled before mixing with coffee extract. This mixture was spray dried and had a much lighter foam colour than the control sample (Trial 1). The mixture before spray drying comprised 15% roast and ground coffee solids concentration and 50% total solids concentration. The foam colour in this case was very similar to the foam colour of Trial 2.

In a further trial, not in accordance with the invention, (Trial 4), a liquid coffee extract and microgrind mix corresponding to 15% microground coffee solids content was mixed. The mixture before spray drying comprised 15% roast and ground coffee solids concentration and 50% total solids concentration. This mixture was injected with nitrogen (approximately 0.1% by mass) and the resulting product was spray dried at 90 bar spray pressure. The spray drier set-points were varied to obtain a product of <5% moisture and a density of approximately 220 kg/m³

In a further trial (Trial 5), a liquid coffee extract and microgrind mix corresponding to 15% microground coffee solids content was mixed and pre-heated to a temperature of about 90-95C. The mixture before spray drying comprised 15% roast and ground coffee solids concentration and 50% total solids concentration. This mixture was injected with nitrogen (approximately 0.1% by mass) and the resulting product was spray dried at 90 bar spray pressure. The spray drier set-points were varied to obtain a product of <5% moisture and a density of approximately 220 kg/m³. The foam colour in this case was much lighter than the foam colour of Trial 4.

### Example 2

Prior trials have suggested that the dark foam colour produced when dissolving spray dried Millicano coffee containing trapped gas (Crema Millicano SD) is due to extraction of the roast and ground coffee from the micro grind (MG) component, into the foam. It was seen that over time, the intensity of the browning of the foam increased when the coffee was made up in cup.

By pre-treating, the extraction from the MG occurs at an earlier stage, which in turn prevents extraction from occurring in the foam during make up. This consequently results in a lighter foam colour. Method of pre-treatment which was used to test for effect on foam colour at different water temperatures was as follows:
Six different samples were made up by adding 10ml water at six different temperatures to 10g micro grind (20, 50, 60, 70, 85 and 100°C). These samples were then frozen in the -65°C, before being dried in the Laboratory Freeze Drier. The dried samples were then re-ground and contained separately. The samples at 20, 50 and 60°C are not in accordance with the invention.

The six different samples were then added to a standard spray dried coffee powder to make up a ratio of 30% (0.9g) micro grind, 70% (2.1g) coffee powder. 200ml of water at 85°C was then added to the samples.

As clearly demonstrated by the two samples containing micro grind treated with water at the highest and lowest temperature limits of the range tested (20°C and 100°C) the pre-treating of the microgrind in advance using water has a positive impact on foam colour. The pre-treated samples have a lighter foam colour compared to the control standard micro grind sample. It can also be seen that pre-treating using water at 20°C is also effective in producing a lighter foam colour, albeit to a lesser extent, as well as using hot water at 100°C.

Three different samples were analysed using the Malvern for their particle size distributions to see whether there were any differences between the pre-treated and non-pre-treated samples. However, the curves showed that there are no differences between the particle size distributions of the different samples. This suggests that pre-treating does not have an impact on the size of the micro grind particles. With this conclusion, extraction was investigated further.

To test for extraction, samples were analysed using UV Spectroscopy. The samples made up for analysis were created as follows:
Ten samples were prepared using standard micro grind and water at two different temperatures. The first five samples were prepared by adding 5 ml of water at 100°C to 0.25g of standard micro grind. Each one of the five samples of micro grind was left in contact with the water for different time periods. The five different sample timings were; 0s, 10s, 30s, 60s, 90s.

Each sample was then filtered after the designated time period to remove all micro grind, and the filtrate was collected. 500 µl of these filtrate samples were then diluted with 50 ml of water. 4000 µl of these diluted samples were then analysed using the UV Spectrometer.

The second five samples were then prepared in the same way as above, however using water at room temperature instead of water at 100°C. These samples are not in accordance with the invention.

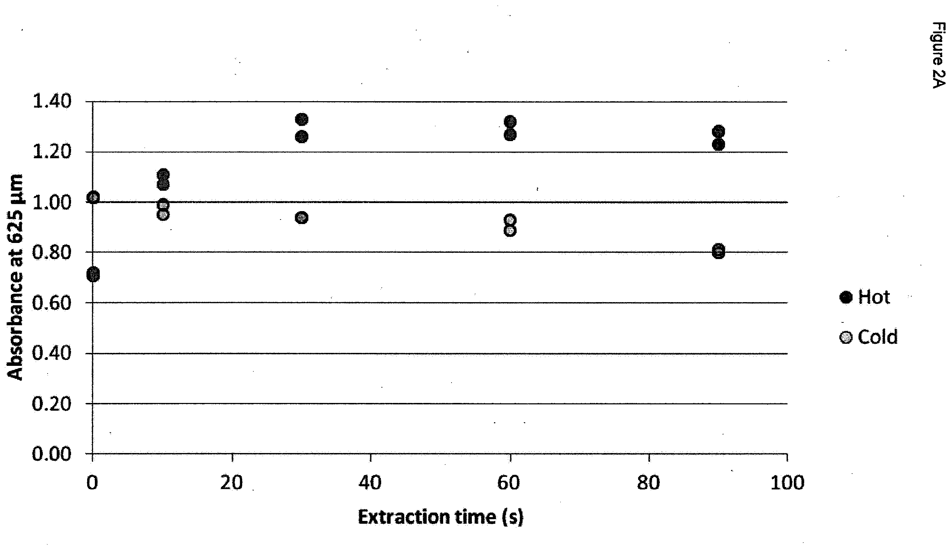

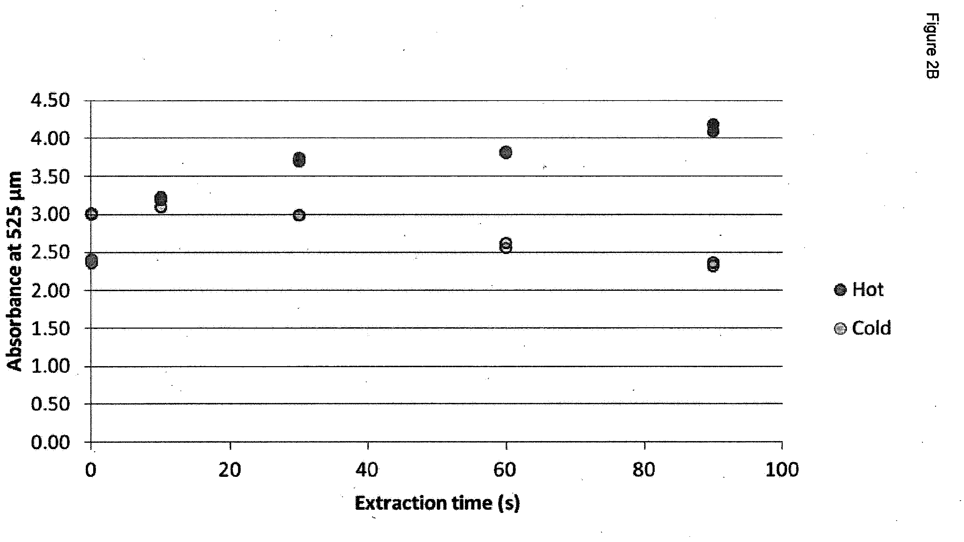

The results are shown in Figures 2A and 2B. The lower hollow circles are for cold samples and the (generally) upper filled circles are for hot samples.

The hypothesis proposed was that as the period of time increases, the percentage of soluble solids in the suspension will also increase due to extraction. The results indicate that with samples made up using hot water, the absorbency of light increases as time does, which supports the proposed hypothesis and the theory of extraction. The cold water samples show the opposite trend. This can perhaps be explained by the fact that soluble solids settle out of the cold water over time, and so the presence of soluble solids have not been picked up during analysis. With the information obtained from the UV Spectrometry analysis, it appears that pre-treatment works by 'pre-extracting' out the soluble solids from the micro grind, so that it does not occur in the foam in the make up of the drink.

As demonstrated by the examples, the hot pre-treatment step provides a better foam than the cold pre-treatment step. Moreover, because the roast and ground coffee is only partially extracted, the flavour of the final product is maintained.

## Claims

1. A method for producing an instant coffee, the method comprising:
providing a finely ground roasted coffee material;
providing an aqueous coffee extract;
mixing the finely ground roasted coffee material with the aqueous coffee extract to form a first mixture; and
drying the first mixture,
wherein, before drying, the finely ground roasted coffee material:
is heated to a temperature of from 70 to 100°C in an aqueous environment for a duration of from 1 minute to 3 hours,
wherein the step of drying the first mixture is a step of spray-drying the first mixture..

2. The method of claim 1, wherein the step of heating the finely ground roasted coffee material in an aqueous environment is performed by heating the first mixture.

3. The method of claim 1, wherein the step of heating the finely ground roasted coffee material in an aqueous environment comprises the steps of:
mixing the finely ground roasted coffee material with an amount of water to provide a precursor mixture;
heating the precursor mixture at a temperature of from 70 to 100°C; and
wherein the first mixture is formed by mixing the precursor mixture with the aqueous coffee extract.

4. The method of any preceding claim, wherein the total coffee solids in the first mixture is from 25 to 75wt%.

5. The method of any preceding claim, wherein the first mixture comprises from 5 to 25wt% of finely ground roasted coffee material.

6. The method of any preceding claim, wherein the finely ground roasted coffee material has a D50 of from 1 to 40 microns.

7. The method of any preceding claim, wherein the finely ground roasted coffee material is heated to a temperature of from 80 to 95°C.

8. The method of any preceding claim, the method further comprising a step of introducing gas into the first mixture before drying, preferably wherein the gas is nitrogen and/or carbon dioxide

9. The method of claim 8, wherein the gas is introduced at a pressure of 50 to 150 Bar.

10. The method of any preceding claim, the method further comprising packaging the instant coffee material.

## Patentansprüche

1. Verfahren zum Herstellen eines Instantkaffees, das Verfahren umfassend:
Bereitstellen eines fein gemahlenen gerösteten Kaffeematerials;
Bereitstellen eines wässrigen Kaffeeextrakts;
Mischen des fein gemahlenen gerösteten Kaffeematerials mit dem wässrigen Kaffeeextrakt, um eine erste Mischung zu bilden; und
Trocknen der ersten Mischung,
wobei, vor dem Trocknen, das fein gemahlene geröstete Kaffeematerial:
für einen Zeitraum von 1 Minute bis 3 Stunden in einer wässrigen Umgebung auf eine Temperatur von 70 bis 100 °C erwärmt wird,
wobei der Schritt des Trocknens der ersten Mischung ein Schritt eines Sprühtrocknens der ersten Mischung ist.

2. Verfahren nach Anspruch 1, wobei der Schritt des Erwärmens des fein gemahlenen gerösteten Kaffeematerials in einer wässrigen Umgebung durch Erwärmen der ersten Mischung durchgeführt wird.

3. Verfahren nach Anspruch 1, wobei der Schritt des Erwärmens des fein gemahlenen gerösteten Kaffeematerials in einer wässrigen Umgebung die Schritte umfasst:
Mischen des fein gemahlenen gerösteten Kaffeematerials mit einer Wassermenge, um eine Vorläufermischung bereitzustellen;
Erwärmen der Vorläufermischung bei einer Temperatur von 70 bis 100 °C; und
wobei die erste Mischung durch Mischen der Vorläufermischung mit dem wässrigen Kaffeeextrakt gebildet wird.

4. Verfahren nach einem vorstehenden Anspruch, wobei die Gesamtkaffeefeststoffe in der ersten Mischung von 25 bis 75 Gew.-% betragen.

5. Verfahren nach einem vorstehenden Anspruch, wobei die erste Mischung von 5 bis 25 Gew.-% fein gemahlenes geröstetes Kaffeematerial umfasst.

6. Verfahren nach einem vorstehenden Anspruch, wobei das fein gemahlene geröstete Kaffeematerial eine D50 von 1 bis 40 Mikrometer aufweist.

7. Verfahren nach einem vorstehenden Anspruch, wobei das fein gemahlene geröstete Kaffeematerial auf eine Temperatur von 80 bis 95 °C erwärmt wird.

8. Verfahren nach einem vorstehenden Anspruch, das Verfahren ferner umfassend einen Schritt eines Einbringens von Gas in die erste Mischung vor dem Trocknen, wobei das Gas vorzugsweise Stickstoff und/oder Kohlendioxid ist.

9. Verfahren nach Anspruch 8, wobei das Gas mit einem Druck von 50 bis 150 bar eingebracht wird.

10. Verfahren nach einem vorstehenden Anspruch, das Verfahren ferner umfassend ein Verpacken des Instantkaffeematerials.

## Revendications

1. Procédé de production d'un café instantané, le procédé comprenant :
la fourniture d'un matériau de café torréfié finement moulu ;
la fourniture d'un extrait de café aqueux ;
le mélange du matériau de café torréfié finement moulu avec l'extrait de café aqueux pour former un premier mélange ; et
le séchage du premier mélange,
dans lequel, avant séchage, le matériau de café torréfié finement moulu :
est chauffé à une température allant de 70 à 100 °C dans un environnement aqueux pendant une durée allant de 1 minute à 3 heures,
dans lequel l'étape de séchage du premier mélange est une étape de séchage par pulvérisation du premier mélange.

2. Procédé selon la revendication 1, dans lequel l'étape consistant à chauffer le matériau de café torréfié finement moulu dans un environnement aqueux est effectuée en chauffant le premier mélange.

3. Procédé selon la revendication 1, dans lequel l'étape consistant à chauffer le matériau de café torréfié finement moulu dans un environnement aqueux comprend les étapes consistant à :
mélanger le matériau de café torréfié finement moulu avec une quantité d'eau pour fournir un mélange précurseur ;
chauffer le mélange précurseur à une température allant de 70 à 100 °C ; et
dans lequel le premier mélange est formé en mélangeant le mélange précurseur avec l'extrait de café aqueux.

4. Procédé selon l'une quelconque des revendications précédentes, dans lequel la teneur totale en matières solides de café dans le premier mélange va de 25 à 75 % en poids.

5. Procédé selon l'une quelconque des revendications précédentes, dans lequel le premier mélange comprend de 5 à 25 % en poids de matériau de café torréfié finement moulu.

6. Procédé selon l'une quelconque des revendications précédentes, dans lequel le matériau de café torréfié finement moulu a un D50 allant de 1 à 40 micromètres.

7. Procédé selon l'une quelconque des revendications précédentes, dans lequel le matériau de café torréfié finement moulu est chauffé à une température allant de 80 à 95 °C.

8. Procédé selon une quelconque revendication précédente, le procédé comprenant en outre une étape d'introduction de gaz dans le premier mélange avant séchage, de préférence dans lequel le gaz est de l'azote et/ou du dioxyde de carbone

9. Procédé selon la revendication 8, dans lequel le gaz est introduit à une pression de 50 à 150 bar.

10. Procédé selon une quelconque revendication précédente, le procédé comprenant en outre l'emballage du matériau de café instantané.
